# EUROPEAN PATENT SPECIFICATION

(11) **EP 3 851 921 B1**
(45) Date of publication and mention of the grant of the patent: **11.03.2026**
(21) Application number: 20020021.0
(22) Date of filing: 14.01.2020
(51) Int. Cl.: G05B 17/02, G06N 3/063, G06N 3/08, G06N 3/098, G06N 3/045, G06Q 20/34

(54) **DISTRIBUTED COMPUTER CONTROL SYSTEM AND METHOD OF OPERATION THEREOF VIA COLLECTIVE LEARNING**
VERTEILTES COMPUTERSTEUERUNGSSYSTEM UND VERFAHREN ZUM BETRIEB DAVON ÜBER KOLLEKTIVES LERNEN
SYSTÈME DE COMMANDE INFORMATIQUE RÉPARTI ET SON PROCÉDÉ DE FONCTIONNEMENT À L'AIDE DE L'APPRENTISSAGE COLLECTIF

(43) Date of publication of application: 21.07.2021
(73) Proprietor: UVUE Limited, Bury St Edmunds IP33 1NE (GB)
(72) Inventor: Baykaner, Khan Richard, Great Cambourne, CB23 5JL (GB); Vestfal, Jiri, Huntingdon, PE29 3EX (GB); Smith, Emma Victoria, Cambridge, CB1 2AY (GB)
(74) Representative: Basck Limited

(56) References cited:
- JUSTIN D HARRIS ET AL: "Decentralized & Collaborative AI on Blockchain", ARXIV.ORG, CORNELL UNIVERSITY LIBRARY, 201 OLIN LIBRARY CORNELL UNIVERSITY ITHACA, NY 14853, 16 July 2019 (2019-07-16), XP081442861, DOI: 10.1109/BLOCKCHAIN.2019.00057
- KANG JIAWEN ET AL: "Incentive Mechanism for Reliable Federated Learning: A Joint Optimization Approach to Combining Reputation and Contract Theory", IEEE INTERNET OF THINGS JOURNAL, IEEE, USA, vol. 6, no. 6, 1 December 2019 (2019-12-01), pages 10700 - 10714, XP011760780, [retrieved on 20191211], DOI: 10.1109/JIOT.2019.2940820
- ZHANG HAOYU ET AL: "SLAQ quality-driven scheduling for distributed machine learning", PROCEEDINGS OF THE 2022 ACM WORKSHOP ON SOFTWARE SUPPLY CHAIN OFFENSIVE RESEARCH AND ECOSYSTEM DEFENSES, ACMPUB27, NEW YORK, NY, USA, 24 September 2017 (2017-09-24), pages 390 - 404, XP058967447, ISBN: 978-1-4503-9889-3, DOI: 10.1145/3127479.3127490

## Description

### TECHNICAL FIELD

The present disclosure relates to distributed computer control systems including worker nodes whose operation is controlled by coordinating collective training of computing models. Moreover, the present disclosure relates to methods for (namely methods of) operating aforesaid distributed computer control systems to improve their stability and operating efficiency, namely by coordinating collective training of their computing models. Furthermore, the present disclosure relates to computer program products comprising a non-transitory computer-readable storage medium having computer-readable instructions stored thereon, the computer-readable instructions being executable by a computerized device comprising processing hardware to execute the aforesaid methods.

### BACKGROUND

Computing models have been contemporarily used in a wide range of applied technical fields, such as weather forecasting, flight simulations, earthquake predictions and the like. Moreover, computing models can be used to control complex technical systems as well as to analyse complex technical systems; for example, use of mathematical models to monitor electrical apparatus is described in a published PCT patent application *"System and Method for monitoring an operating conditions of an electrical device when in operation"*; Applicant Faraday Predictive Ltd., WO2019/158751A1. However, training such computing models is often highly resource intensive. Therefore, recently, collective training of computing models has been proposed, wherein worker nodes of computer systems simultaneously perform training of computing models. Adopting such a collective learning approach reduces a data processing load on a given worker node and is also time-efficient. Academic publication J. D. Harris and B. Waggoner, "Decentralized and Collaborative Al on Blockchain," 2019 IEEE International Conference on Blockchain (Blockchain), Atlanta, GA, USA, 2019, pp. 368-375, doi: 10.1109/Blockchain.2019.00057, proposes a framework for participants to collaboratively build dataset and use smart contracts to host a continuously updated model.

In a given distributed computing system comprising a plurality of computer nodes, typically referred to as "worker nodes", such collective learning, namely training, of a computing model is implemented by worker nodes by using either a synchronous training process or, alternatively, an asynchronous training process; the worker nodes participate in collective training of the computing model. In a synchronous training process, each of the worker nodes must perform training of the computing model simultaneously and only move onto a next step of the training process once each of worker nodes has performed some training of the computing model. However, such a synchronous training process creates an inefficiency in terms of time, as the worker nodes that perform training at a faster rate must wait for the worker nodes (namely, stragglers) that perform training at a slower rate to complete their training process. Alternatively, the asynchronous training process does not enforce synchronisation between the worker nodes, wherein each worker node can perform their training of the computing model at their own rate. However, such an asynchronous training process encounters a problem of staleness, wherein training provided by worker nodes performing at a slower rate is potentially out-of-date with respect to other worker nodes that provide their training of the computing model at a faster rate.

Moreover, conventional methods for implementing collective learning in a group of multiple worker nodes generally involve using a centralised authority employing a hierarchy of parameter servers to provide a common computing model to the worker nodes to be trained, wherein each of the worker nodes uses a private set of training data to update the computing model and return the updated computing model for aggregation at the centralized authority. Alternatively, some conventional methods employ network bandwidth optimisation by coordinating updates in a cyclical order amongst the worker nodes. However, such conventional methods cannot be operated in an asynchronous manner and thus encounter a problem of straggling worker nodes that reduce system performance.

Furthermore, recent asynchronous methods used to train a computing model potentially reduce staleness by excluding worker nodes that perform their training at a rate below a threshold training rate. Specifically, such methods produce a single global model, and potentially do not train the computing model efficiently if a large amount of worker nodes concurrently overwrite same weights of variables in the computing model. Moreover, such methods often do not perform efficiently if the worker nodes operate remotely and are not located at a same geographical location.

Therefore, there exists a need to address aforementioned problems associated with conventional systems and methods for coordinated training computing models.

### SUMMARY

The present disclosure seeks to provide an improved distributed computer system that includes a plurality of worker nodes that are coupled together via a data communication network to exchange data therebetween, wherein collective learning of the worker nodes is implemented within the distributed computer system, by the worker nodes. The present disclosure seeks to provide, in the aforementioned distributed computer system, a mechanism for controlling such a system, implemented by the worker nodes within the system. The present disclosure provides a system and a method which control the system via a mechanism of collective learning, resulting in accountability between the worker nodes, thereby ensuring a more reliable process when training a given computing model. Critically, such an approach avoids a need for elaborate verification of the worker nodes, resulting in an improved stability and operating efficiency; as well as more efficient use of data memory within the system.

In one aspect, the present disclosure provide a distributed computer control system that includes a plurality of worker nodes that are coupled together via a data communication network to exchange data therebetween, wherein collective learning of the worker nodes occurs within the distributed computer control system, wherein the worker nodes include computing arrangements to process data therein, wherein operation of the distributed computer control system is coordinated by employing a distributed ledger arrangement, wherein the distributed computer control system is arranged to execute at least one smart contract via use of the distributed ledger arrangement, characterized in that the distributed computer control system comprises a monitoring arrangement to provide learning parameters to each of the plurality of worker nodes by executing the at least one smart contract, wherein each of the worker nodes, when in operation, trains a computing model based on the learning parameters and at least one set of training data, and wherein
the monitoring arrangement provides a reward to at least one of the worker nodes for training the computing model, wherein the reward is determined based on:
(i) a number and frequency of intermediary computing models provided by a given worker node to a remainder of the worker nodes; and
(ii) a quality of the intermediary computing models. characterized in that the monitoring arrangement provides learning parameters to each of the plurality of worker nodes by executing the at least one smart contract, wherein each of the worker nodes is operable to train the computing model based on the learning parameters and at least one set of training data, wherein the plurality of worker nodes are configured to collectively train the computing model in multiple iterations in a synchronous synchronization mode or an asynchronous synchronization mode, wherein each worker node comprises an intermediary computing model, that has been partially trained, wherein at the end of each iteration, the at least one smart contract is added to the distributed ledger arrangement as a block to establish the learning parameters for a next iteration, wherein the monitoring arrangement is configured to dynamically switch between the synchronization modes to ensure that a coordinated collective training of the computing model is achieved.

The invention is of advantage in that there is provided a reliable and coordinated operation of training of a computing model within the distributed computer control system.

"Reliability" is defined in the present disclosure as an increased availability of computing resources being available within the distributed computer control system, that results in a higher average processing speed when executing a given computing task. Thus, within the context of the present disclosure, a more reliable system is aso a system in which "system down time" is decreased (or avoided) in comparison to an equivalent system which does not include collective learning of worker nodes. As a result, decreased "down time" and increased processing speed are also determinable from the amount of time worker nodes are active or available when computer processing is required, or even by how many worker nodes are available for executing given computing tasks. The distributed computer control system of the present disclosure is able to eliminate drawbacks of stragglers and staleness associated with conventional methods for coordinating collective learning between the worker nodes and provides an accountable management of collective learning between the worker nodes that ensure an efficient utilisation of resources of the worker nodes. As a result, enhance stability and performance in operation of the distributed computing system is achieved, as aforementioned.

Optionally, in the distributed computing control system, the monitoring arrangement operates to exclude worker nodes from the distributed computer system whose number, frequency and/or quality of intermediary computing models provided thereby to the remainder of the worker nodes are below a predefined threshold and/or to exclude worker nodes whose intermediary computing models are found to be erroneous to operation of the distributed computer system. In particular, "quality" is defined and measured in the present disclosure as a relative quantity that provides a rank in which the lower number in the rank is taken as a node with intermediary computing models that are found to be erroneous, or are found to result in less efficiency gains then nodes with higher quality rank. In turn, "efficiency" and "stability" are respectively defined as measures of effectiveness of use of data memory and data processing power within the system when in operation, and a measure of reliability of computer resources being available within the system and an availability of computing resources to execute data processing tasks. Optionally, in the distributed computing control system, the plurality of worker nodes employs machine learning (ML) algorithms to train the computing model.

Optionally, in the distributed computing control system, the learning parameters provided by the monitoring arrangement comprise information relating to at least one of:
(i) a subset of worker nodes from the plurality of worker nodes receiving the intermediary computing models;
(ii) a synchronization mode that is followed by the plurality of worker nodes; and
(iii) a latest intermediary computing model to be trained within the distributed computer system.

Optionally, in the distributed computing control system, the at least one smart contract includes a compensation for worker nodes having a limited computing power relative to other of the worker nodes, wherein the worker nodes of limited computing capability are limited in the frequency and number of intermediary computing models that they provide due to limitations in computing capability thereof.

In another aspect, the present disclosure provide a method for (namely, a method of) operating a distributed computer control system that includes a plurality of worker nodes that are coupled together via a data communication network to exchange data therebetween, wherein the plurality of worker nodes includes computing arrangements to process data therein, wherein collective learning occurs within the distributed computing control system, wherein the distributed computer control system employs a distributed ledger arrangement to coordinate operation of the distributed computer control system, wherein the distributed computer control system is arranged to execute at least one smart contract via use of the distributed ledger arrangement,
characterized in that the method includes:
(i) providing the distributed computer control system with a monitoring arrangement to provide learning parameters to each of the plurality of worker nodes by way of executing the at least one smart contract, wherein each of the plurality of worker nodes is operable to train a computing model based on the learning parameters and at least one set of training data; and
(ii) arranging for the monitoring arrangement to reward at least one of the plurality of worker nodes for training the computing model, wherein the reward is determined based on a number and frequency of intermediary computing models provided by a given worker node to a remainder of the worker nodes and the quality of the intermediary computing models.
(iii) arranging for the monitoring arrangement to track the operation of each of the worker nodes (102, 104, 106) wherein the method further comprises the plurality of worker nodes collectively training the computing model in multiple iterations in a synchronous synchronization mode or an asynchronous synchronization mode, wherein each worker node comprises an intermediary computing model, that has been partially trained, wherein at the end of each iteration, the at least one smart contract is added to the distributed ledger arrangement (112) as a block to establish the learning parameters for a next iteration, wherein the monitoring arrangement (110) dynamically switches between the synchronization modes to ensure that a coordinated collective training of the computing model is achieved.

Optionally, the method comprises excluding worker nodes from the distributed computer system whose number, frequency and/or quality of intermediary computing models provided thereby to the remainder of the worker nodes are below a predefined threshold and/or to exclude worker nodes whose intermediary computing models are found to be erroneous to operation of the distributed computer system.

Optionally, the method comprises arranging for the plurality of worker nodes to employ machine learning (ML) algorithms to train the computing model.

Optionally, the method comprises arranging for the learning parameters provided by the monitoring arrangement to comprise information relating to at least one of:
(i) a subset of worker nodes from the plurality of worker nodes receiving the intermediary computing models;
(ii) a synchronization mode that is followed by the plurality of worker nodes; and
(iii) a latest intermediary computing model to be trained within the distributed computer system.

The method results in a distributed computer system that includes a plurality of worker nodes coupled together via a data communication network which is improved in respect to use of computing power and/or speed of processing computing tasks in a distributed system (thus also energy saving), and with respect to the use of computing memory (more economic use of memory for achieving an equivalent result). In particular, the implementation of the method results in the configuration of the system being dynamically modified to ensure that system performance is maintained. Optionally, in the method, the at least one smart contract includes a compensation for worker nodes having a limited computing power relative to other of the worker nodes, wherein the worker nodes of limited computing capability are limited in the frequency and number of intermediary computing models that they provide due to limitations in computing capability thereof. Such compensation can be in any form, including, but not limited to, provision of computing power from one or more nodes, or economic incentives of any form.

In yet another aspect, an embodiment of the present disclosure provides a computer program product comprising a non-transitory computer-readable storage medium having computer-readable instructions stored thereon, the computer-readable instructions being executable by a computerized device comprising processing hardware to execute a method for operating a distributed computer control system.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is a schematic illustration of a network environment, wherein a distributed computer control system is implemented, pursuant to an embodiment of the present disclosure;
- FIG. 2: is a block diagram depicting an exemplary execution of smart contracts by a monitoring arrangement to coordinate operation of worker nodes, in accordance with an embodiment of the present disclosure; and
- FIG. 3: is a flow chart depicting steps of a method for operating a distributed computer control system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, the present disclosure provides a distributed computer control system, according to claim 1.

In another aspect, the present disclosure provide a method for (namely, a method of) operating a distributed computer control system according to claim 6.

The distributed computer control system, and the method for operating the distributed computer control system, as described in the present disclosure, employ a distributed ledger arrangement to coordinate collective learning of the computing model and to provide a training process that is efficient in utilisation of resources of worker nodes associated therewith. Moreover, the distributed computer control system provides a highly time-efficient training process that assists to ensure that the distributed computing system functions with greater reliability and stability than hitherto feasible. Notably, the distributed computer control system ensures the coordination between the plurality of worker nodes thereof by employing the distributed ledger arrangement and specifically, the at least one smart contract. Specifically, the at least one smart contract that is executed on the distributed ledger arrangement provides learning parameters to each of the worker nodes performing the training of the computing model. More specifically, the learning parameters ensure a coordinated working of the worker nodes, as the learning parameters establish targets for the training process and synchronisation modes for the training process. It will be appreciated that the distributed computer control system has an ability to switch between synchronisation modes of the training process. Notably, the distributed computer control system, and specifically the monitoring arrangement, optionally switches the synchronisation mode from asynchronous to synchronous if intermediary computing models received from a portion of worker nodes are substantially out-of-date. Alternatively, the monitoring arrangement may switch the synchronisation mode from synchronous to asynchronous to accelerate significantly the training process of the computing model. Furthermore, the distributed computer control system of the present disclosure ensures accountability in the training process from the worker nodes regarding the training process and quality of intermediary computing models provided thereby. Additionally, worker nodes not performing at a desired output and efficiency are optionally excluded from the system, thus maintaining an integrity and a reliability of operation of the system. Moreover, the reward provided by the monitoring arrangement is determined in a manner to incentivise efficient working of the worker nodes, thereby ensuring better operating performance therefrom. Therefore, in the operation of the system, the reward is an intermediate step implemented by the system to that results in an improvement in operation, for example decrease system errors.

The distributed computer control system of the present disclosure enables management of the plurality of worker nodes, wherein each of the worker nodes processes data to train a computing model collectively. Notably, there is provided thereby a collective learning management system that is implemented in communication with a distributed ledger arrangement, wherein the collective learning management system uses the distributed ledger arrangement, specifically, the at least one smart contract, to enforce coordination and accountability between the plurality of worker nodes that collectively train the computing model.

Furthermore, the worker nodes include computing arrangements that are operable to respond to, and to process, instructions and data therein. Optionally, the computing arrangements include, but are not limited to, a microprocessor, a microcontroller, a complex instruction set computing (CISC) microprocessor, a reduced instruction set (RISC) microprocessor, a very long instruction word (VLIW) microprocessor, an artificial intelligence (AI) computing engine based on hierarchical networks of variable-state machines, or any other type of processing circuit; for example the worker nodes are optionally implemented in digital hardware including field programmable gate arrays (FPGA's). Furthermore, the computing arrangements are optionally one or more individual processors, processing devices and various elements associated with a processing device that are optionally shared by other processing devices. Additionally, the computing arrangements are arranged in various architectures for responding to, and processing, the instructions that drive operation of the distributed computing system. Optionally, the computing arrangements are processing devices that operate automatically; in such regard, the computing arrangements are equipped with artificial intelligence (AI) algorithms that respond to, and perform, the instructions that drive operation of the distributed computing system based on data learning techniques. More optionally, the computing arrangements are processing devices that respond to, and perform, the instructions that drive operation of the distributed computing system based on an input provided from a user (for example, the worker nodes participating in the distributed computing system). Furthermore, the collective learning of the worker nodes is controlled within the distributed computer system. Notably, the computing model is trained between the plurality of worker nodes in a manner that the intermediary computing models that have been partially trained are shared between the worker nodes and resources of worker nodes are utilized productively.

Moreover, the plurality of worker nodes is mutually coupled in communication via the data communication network; in other words, the data communication network allows communications to be exchanged between the plurality of worker nodes. Each of the plurality of worker nodes is capable of communicating with other worker nodes via the data communication network to facilitate training of the computing model. Notably, the data communication network refers to an arrangement of interconnected, programmable and/or non-programmable components that, when in operation, facilitate data communication between one or more electronic devices and/or databases. Furthermore, the data communication network optionally includes, but is not limited to, a peer-to-peer (P2P) network, a hybrid peer-to-peer network, local area networks (LANs), radio access networks (RANs), metropolitan area networks (MANs), wide area networks (WANs), all of or a portion of a public network such as global computer network known as the Internet^{®}, a private network, a cellular network and any other communication system. Additionally, the data communication network employs wired or wireless communication that can be carried out via one or more known protocols.

The operation of the distributed computer control system is coordinated by employing the distributed ledger arrangement. Herein, the term *"distributed ledger arrangement"* refers to a ledger (such as a database) comprising entries recording operations and/or contracts, with associated timestamps. Pursuant to embodiments of the present disclosure, the distributed ledger arrangement refers to a database of the entries, for example represented as blocks. Moreover, the distributed ledger arrangement is consensually shared and synchronised in a decentralised form across the plurality of worker nodes. In this regard, the ledger is consensually shared and synchronised across multiple sites, institutions or geographies. Optionally, such worker nodes are established across different locations and operated by different users. Beneficially, the distributed ledger arrangement eliminates a need for a central authority to maintain the distributed ledger arrangement and protect it against unauthorized manipulation. Specifically, the entries or blocks in the distributed ledger arrangement are monitored publicly, thereby making the distributed ledger arrangement robust against malicious third-party attacks. Notably, the worker nodes are optionally mutually independent entities that become a part of the distributed computer system and provide resources thereof in exchange for a reward provided as a compensation for the resources used thereof for training the computing model.

It will be appreciated that the plurality of worker nodes (also referred to as "peers") in the distributed ledger arrangement optionally access each of the entries in the distributed ledger arrangement and optionally own an identical copy of each of the entries. Notably, an alteration made to the distributed ledger arrangement is reflected (namely communicated and updated) almost instantaneously to each of the plurality of worker nodes. Subsequently, an addition of an entry is completed when all or some of the plurality of worker nodes perform a validation with respect to the addition. In such a case, the entry is recorded (namely, added) in the distributed ledger arrangement in an immutable form when at least a threshold number of worker nodes from the plurality of worker nodes reach a consensus that the entry is valid. Alternatively, recording of the entry or the block is denied when the threshold number of worker nodes reach a consensus that the entry is invalid. In an example, the threshold number of worker nodes to reach a consensus is optionally more than fifty percent of the plurality of worker nodes. Optionally, information in the distributed ledger arrangement is stored securely using cryptography techniques, for example using a one-time pad provided by using a combination of data obfuscation and data encryption; optionally, combinations of data encryption and data obfuscation employed to provide a "one-time pad" are communicated as indices that are received at the worker nodes that refer to entries of protected key wallets kept at the work nodes that provide actual information enabling de-encryption and de-obfuscation to be implemented at the worker nodes, thereby making it extremely hard for malicious third parties to eavesdrop into the system, and attempt to disrupt operation of the system. Such data security also enhances stability of operation of the system, and thus enhances its reliability.

The distributed ledger arrangement executes at least one smart contract. Herein, the term *"smart contract"* refers to a computer protocol implemented using the distributed ledger arrangement comprising information required to coordinate the collective learning of the worker nodes by using the distributed computer control system. Moreover, the smart contract permits trusted execution thereof without involving a central authority, legal system, or externally enforced mechanisms. Pursuant to the embodiments of the present disclosure, the at least one smart contract is employed to coordinate learning between the worker nodes and to ensure that the learning parameters relating to training of the computing model are provided to the plurality of worker nodes.

The distributed computer control system comprises a monitoring arrangement. Notably, the monitoring arrangement is communicably coupled to the plurality of worker nodes in the distributed computer control system. Herein, the monitoring arrangement, when in operation, tracks operation of each of the worker nodes and ensure a coordinated collective training of the computing model is achieved. Furthermore, the monitoring arrangement optionally includes, but is not limited to, a microprocessor, a microcontroller, a complex instruction set computing (CISC) microprocessor, a reduced instruction set (RISC) microprocessor, a very long instruction word (VLIW) microprocessor, an artificial intelligence (AI) computing engine based on hierarchical networks of variable-state machines, or any other type of processing circuit. Furthermore, the monitoring arrangement is optionally implemented be one or more individual processors, processing devices and various elements associated with a processing device that are shared by other processing devices.

Throughout the present disclosure, the term *"computing model"* refers to a mathematical and/or analytical model that comprises a plurality of variables therein, wherein the mathematical model provides a plurality of outputs based on changing values of the plurality of variables. In an example, the computing model comprises at least one of: multivariable functions, computational algorithms, statistical variables and the like. Furthermore, the computing model is trained using one or more sets of training data, wherein the training data is customised based on a function and a desired output required from the computing model. It will be appreciated for mathematical models that considerable input data is required for trends to be identified and for stochastic noise to be reduced. Moreover, artificial intelligence (AI) algorithms are taught by providing a plurality of training data scenarios, wherein the AI algorithms identify patterns and trends in the training data scenarios and adapt their AI operating parameters so that the AI algorithms are able to provide learned reactions or analyses to the training data scenarios.

Pursuant to embodiments of the present disclosure, the distributed computing control system, and the method for operating the distributed computing control system, as described herein, function to provide collective training of the computing model. Specifically, the plurality of worker nodes is utilized to ensure that resources thereof are efficiently controlled. It will be appreciated that the computing model is trained by the plurality of worker nodes in at least one iteration and possibly, in a plurality of iterations. Specifically, the worker nodes collectively train the computing model and perform the training in multiple iterations prior to obtaining the trained computing model. Notably, at the end of each iteration, each of the plurality of worker nodes has an intermediary computing model, that has been partially trained thereby. Subsequently, at the end of each iteration, at least one smart contract is added to the distributed ledger arrangement as a block to establish the learning parameters for the next iteration. Furthermore, a status and count of each iteration and a number of total iterations utilised for training of the computing model are optionally stored in the at least one smart contract. Optionally, one or more worker nodes provide intermediary computing models thereof to one or more remainder worker nodes, wherein the one or more remainder worker nodes train the received intermediary computing models further or incorporate training of the received intermediary computing models in their own intermediary computing models.

The monitoring arrangement provides learning parameters to each of the plurality of worker nodes by executing the at least one smart contract. Notably, the learning parameters function as training instructions for the plurality of worker nodes. Specifically, the plurality of worker nodes trains the computing model based on the learning parameters. It will be appreciated that each of the plurality of worker nodes is communicably connected to the distributed ledger arrangement. The monitoring arrangement of the present disclosure uses the distributed ledger arrangement to ensure coordinated learning between the plurality of worker nodes and to ensure that resources of the plurality of worker nodes are effectively utilized, in that the worker nodes train the computing model in tandem with each other and thereby promote the overall collective training of the computing model.

The at least one smart contract is employed to establish the latest learning parameters for training of the computing model. Specifically, the at least one smart contract is added as an entry on the distributed ledger arrangement, wherein the at least one smart contract enforces the learning parameters on the worker nodes. More specifically, the at least one smart contract is executed at every iteration of the training of the computing model, to establish learning parameters for that particular iteration of training of the computing model. It will be appreciated that various factors and conditions affect the manner the computing model is trained. Therefore, such factors and conditions are provided and enforced by the at least one smart contract.

Moreover, each of the worker nodes, when in operation, trains the computing model based on the learning parameters and at least one set of training data. Notably, the at least one set of training data is employed to extract learning therefrom computationally and provide such extracted learning to the computing model. In an example implementation, the at least one set of training data for each worker node is mutually different relative to other worker nodes. In another example implementation, the at least one set of training data is mutually common for the plurality of worker nodes. Furthermore, the computing arrangements of each of the worker nodes are employed to train the computing model based on the at least one set of training data and the learning parameters.

Optionally, the plurality of worker nodes employ machine learning (ML) algorithms to train the computing model; machine learning algorithms modify their algorithm parameters in an adaptive manner in response to data being processed by application of the machine learning algorithms to the data. Notably, machine learning algorithms are implemented on the computing arrangements of the worker nodes to train the computing model. The machine learning algorithms function to train the computing model in order to achieve a given desired result. Specifically, the machine learning algorithms are programmed by the worker nodes according to the given desired result required from the computing model. Typically, the machine learning algorithms function by providing a training dataset to the computing model and programming an output required from the computing model. Subsequently, the trained computing model undergoes testing by the worker nodes to ensure its desired functioning. The machine learning algorithms provide a sophisticated method of training a computing model without explicitly programming instructions therein. Specifically, the machine learning algorithms train the computing model by providing one or more sets of training data to the computing model and ensuring that the computing model learns by being exposed to the exemplary one or more sets of training data. It will be appreciated that training the computing model using machine learning algorithms is a resource-intensive process and thus requires efficient and planned utilisation of resources of the plurality of worker nodes. Furthermore, due to the complex and resource-intensive nature of the training process, the plurality of worker nodes functions mutually in tandem, namely in a mutually coordinated manner, to train simultaneously the computing model results to utilize a more efficient process. Specifically, the distributed computing control system, and the method for operating the distributed computing control system, described herein ensure that the training of the computing model does not occur in information silos, involving multiple worker nodes repeating the same training of the computing model; such "silo" operation is very inefficient and utilizes computing resources of the worker nodes in an ineffective manner. Therefore, to eliminate such inefficiency in the training process, the distributed computing system, and method for operating the system, ensure that information sharing from at least one worker node to another at least one worker node in the remainder plurality of worker nodes is efficiently implemented.

Optionally, in an embodiment, there are employed machine learning algorithms, and specifically deep neural networks (such as k-space networks), to train the computing model, wherein the computing model is at least one multivariable function. Consequently, each iteration involving an intermediary computing model comprises calculating a gradient of the at least one multivariable function; by "gradient" is meant a measure of convergence of the intermediate computing model towards a final intended form for the distributed computing control system; such a "gradient" can be an aggregate of several gradients relating to several parameters of the computing model. Specifically, the gradient refers to a vector-valued function that stores partial derivatives of the at least one multivariable function. Notably, calculating a gradient at each iteration to obtain an intermediary computing model comprises reducing the error and ensuring that the final trained computing model closely takes in account (i.e. represents) the data trends in the training dataset. Therefore, with each iteration, the values of the gradients and weight of variable relating thereto are varied and the data trends are monitored to achieve a reduced error, for example a minimised error.

Optionally, the learning parameters provided by the monitoring arrangement comprise information relating to at least one of:
(i) a subset of worker nodes from the plurality of worker nodes receiving the intermediary computing models;
(ii) a synchronization mode that is followed by the plurality of worker nodes; and
(iii) a latest intermediary computing model to be trained within the distributed computer system.

Optionally, in regard to (i) to (iii) above, the learning parameters are provided by the monitoring arrangement by executing at least one smart contract comprise information relating to a subset of worker nodes from the plurality of worker nodes receiving the intermediary computing models. As aforementioned, the computing model is trained by the plurality of worker nodes in at least one iteration, for example in a single iteration or in a plurality of iterations. Specifically, in each iteration of training the computing model, one or more intermediary computing models are obtained by a given set of one or more worker nodes that is to be communicated to the subset of worker nodes in the plurality of worker nodes. Subsequently, after the one or more intermediary computing models are communicated to the subset of worker nodes, the subset of worker nodes operates to train the received one or more intermediary computing models in the next iteration of the training process. Therefore, the at least one smart contract comprises information relating to the subset of worker nodes receiving the intermediary computing models. Such information optionally includes communication addresses of the computing arrangements of such worker nodes in the subset of worker nodes. In an example, such information comprises addresses of such worker nodes on the distributed ledger arrangement. Such communication information provided by the at least one smart contract informs the worker nodes that are providing the intermediary computing models about which worker nodes are to receive the intermediary computing models

In an embodiment, machine learning (ML) algorithms are employed to train the computing model; the intermediary computing models provide details relating to the gradient that the subset of worker nodes will push next updates thereof into the subsequent iteration of the training process. Specifically, one or more worker nodes in the plurality of worker nodes obtain gradients as an assessment of performance when implementing an iteration of the training process, wherein the gradients provide an indication whether or not a substantially reduced error in comparison to the previous iteration has achieved. Therefore, details of such a gradient are provided as intermediary computing models to the subset of worker nodes; the subset of worker nodes then push their next updates into the next iteration of the training process.

Optionally, the learning parameters provided by the monitoring arrangement by executing at least one smart contract comprise a latest intermediary computing model to be trained within the distributed computer system. Specifically, the latest intermediary computing model refers to a target for the plurality of worker nodes that each of the worker nodes aims to achieve in the iteration of the training process occurring after the execution of the given at least one smart contract. As aforementioned, at the end of each iteration of the training process, the at least one smart contract added to the distributed ledger arrangement establishes learning parameters for the next iteration. Therefore, the at least one smart contract establishes the latest intermediary computing model that is to be achieved by the worker nodes in the subsequent iteration of the training process. It will be appreciated that the at least one smart contract optionally comprises information relating to a plurality of latest intermediary computing models. Specifically, different sets of worker nodes in the system are able to train towards different targets of training the computing model based on resource capacity and training abilities thereof. Therefore, in an embodiment, a plurality of latest intermediary computing models to be trained are allocated based on capability of training of the worker node.

Optionally, in an embodiment, wherein machine learning algorithms are employed to train the computing model, the latest intermediary computing model relates to a gradient target that a computing model is to be trained towards by the worker nodes. Specifically, as aforementioned, the computing model is trained by the plurality of worker nodes in an iterative process, wherein each iteration of the training process pushes the computing model further towards the trained computing model. Therefore, each gradient target established at every iteration of the training process pushes the computing model trained by the machine learning algorithms towards a reduced error, for example a minimised error.

Optionally, the learning parameters comprise information relating to a plurality of latest intermediary computing models to be trained by different sets of worker nodes from the plurality of worker nodes. It will be appreciated that different worker nodes in the plurality of worker nodes have different levels of resource capacity and thus, are able to train the computing model at different rates of training. Therefore, the monitoring arrangement beneficially determines a plurality of latest intermediary computing models, relating to a plurality of gradient targets, and beneficially allocates different gradient targets to different sets of worker nodes; worker nodes in a given set of worker nodes comprise similar resource capacity and also exhibit similar rate of training. Such estimation of the resource capacity of the worker nodes is optionally determined by monitoring an average delay in providing an intermediary computing model by each worker node and/or by monitoring performance metrics of each of the worker node.

Optionally, the learning parameters provided by the monitoring arrangement by executing at least one smart contract comprise a synchronization mode that is followed by the plurality of worker nodes when executing training. Notably, the training of the computing model is optionally performed by the plurality of worker nodes in a synchronous synchronization mode or, alternatively, an asynchronous synchronization mode. Specifically, in a synchronous synchronization mode, each of the worker nodes performs training of computing model and provides an intermediary computing model before proceeding to the next iteration of the training process. Alternatively, in the asynchronous synchronization mode, each of the worker nodes perform training independent of the training progress of other worker nodes in the plurality of worker nodes. Each of the synchronous and asynchronous synchronization modes provides different technical advantages:
(i) in the synchronous synchronization mode, the intermediary computing models are developed at a substantially coordinated rate; whereas
(ii) in the asynchronous synchronization mode, the training process can proceed at a faster rate.

However, each of the synchronous and asynchronous synchronization modes provides different technical disadvantages:
(i) in the synchronous synchronization mode, the worker nodes with a faster training rate have to wait for the worker nodes with a slower training rate to complete their training; whereas
(ii) in the asynchronous synchronization mode, the intermediary computing models provided by worker nodes with a slower training rate are potentially out-of-date with respect to the latest intermediary computing model being trained.

It will be appreciated that each of the synchronization modes has associated advantages and drawbacks associated therewith; based on state of training process of the computing model, the at least one smart contract provides information relating to the synchronization mode to be followed by the plurality of worker nodes in that given iteration of the training process. A choice of synchronization mode employed within the distributed computing control system can have a bearing on a stability of operation of the control system, for example as aforementioned.

Optionally, the monitoring arrangement employs a plurality of synchronization modes to coordinate intermediary computing models communicated between the plurality of worker nodes and, when in operation, is able to switch between the plurality of synchronization modes. As aforementioned, the smart contract provides information relating to the synchronization mode to be followed by the plurality of worker nodes. The monitoring arrangement employs a plurality of synchronization modes, specifically, the synchronous synchronization mode or asynchronous synchronous synchronization mode to coordinate the training process of the plurality of worker nodes. In an example implementation, the synchronization mode followed by the plurality of worker nodes is asynchronous synchronization mode. Subsequently, the monitoring arrangement detects that a substantial number of worker nodes are lagging behind in the training process and are providing intermediary computing models that are not in-line with the latest intermediary computing model being trained. Therefore, the monitoring arrangement is able to switch the synchronization mode to synchronous synchronization mode to restore coordination between the plurality of worker nodes; in other words, the monitoring arrangement is able to reconfigure a manner of operation of the worker nodes of the distributed computing control system in a dynamic manner. A manner of synchronization in the distributed computing system concerns a technical operation of the distributed computing control system, for example to enhance its stability or reliability.

Optionally, the monitoring arrangement, when in operation, switches between the plurality of synchronization modes depending on a data processing load being experienced at any given time by the distributed computer system. Notably, the data processing load being experienced by the distributed computer control system is dependent on the synchronization mode being followed by the plurality of worker nodes. In an example implementation, the data processing load experienced by the distributed computer control system is higher when the asynchronous synchronization mode is being followed by the plurality of worker nodes because the number of intermediary computing models communicated between the worker nodes in such synchronization mode is potentially substantially higher than in the synchronous synchronization mode. Specifically, in asynchronous synchronization mode, the worker nodes communicate intermediary computing models at their own volition, and not at a coordinated predetermined time; therefore, maintaining coordination between the plurality of worker nodes potentially requires greater data processing effort. Therefore, in such an implementation, the monitoring arrangement is able to switch to the synchronous synchronization mode to reduce the data processing load on the distributed computer system; responsiveness and stability of operation of the distributed computer control system is thereby enhanced.

As aforementioned, the monitoring arrangement provides a reward to at least one of the worker nodes for training the computing model. The plurality of worker nodes of the distributed computer system trains the computing model and provide resources thereof in exchange for a reward provided as a compensation for the resources provided. Therefore, at least one of the worker nodes providing a substantial contribution of resources towards obtaining the trained computing model is rewarded in operation of the distributed computing control system. Beneficially, such a reward-based system ensures an accountable performance of the worker nodes and furthermore encourages the worker nodes to employ a higher proportion of resources to achieve a higher reward; the reward therefore improves responsiveness of the distributed computing control system that improves its operating stability. Therefore, such investment of the worker nodes towards training the computing model provides a computing model that has been trained to exhibit a significantly low error rate and has been trained more promptly. Herein, the term *"reward"* refers to a technological incentive, provided to one or more worker node as a compensation for providing resources for training the computing model. Optionally the "reward" includes a financial incentive. For example, the monitoring arrangement optionally provides the reward to at least one of the worker nodes by use of a smart contract.

The reward is determined based on:
(i) a number and frequency of intermediary computing models provided by a given worker node to a remainder of the worker nodes; and
(ii) a quality of the intermediary computing models.

"Quality" is optionally determined by a trend in evolution of the computer models, for example its convergence towards an intended form for the model; alternatively, a mechanism is included on the model to assess its accuracy, for example test data to provide to the model to verify an accuracy of its outputs; optionally, the test data are measured conditions occurring within a real physical system, and the outputs are representative of outputs required for correctly controlling the real physical system. The plurality of worker nodes optionally provides a plurality of intermediary computing models, wherein the intermediary computing models correspond to training targets established by the learning parameters provided by the at least one smart contract. Specifically, the intermediary computing models refer to partially trained computing models provided by the worker nodes to obtain a trained computing model in a stepped iterative process. It will be appreciated that the trained computing model is potentially not capable of being obtained in a single-step procedure by a worker node and is therefore obtained by efforts provided by the plurality of worker nodes participating in a collaborative training process using the distributed ledger arrangement. Therefore, worker nodes beneficially provide intermediary computing models for a remainder of the worker nodes in the distributed computer system in order to establish their contribution to the training progress and to achieve an efficient training process by using intermediary computing models that exhibit a lower error rate in comparison to others, to train further. Therefore, the monitoring arrangement provides a reward, for example as defined in the foregoing, based on the number and frequency of the intermediary computing models provided by a given worker node. Notably, if a given worker node provides training results to a higher number of intermediary worker node at a significantly short intervals of time in the training process, such a given worker node is an active participant and valued contributor to the training of the computing model and is beneficially rewarded accordingly. Furthermore, the reward is determined based on the quality of the intermediary computing models provided by the worker nodes, wherein a measure of determining quality is dependent on a type of the computing model. In an example, for a given computing model, a measure of quality is an error rate of the computing model. In another example, for a given computing model, a measure of quality is a time efficiency of the computing model. Other approaches to determine a quality of the intermediary computing models are feasible, for example by correlation of parameters of a given intermediary computer model with a reference threshold set of parameters. Notably, the monitoring arrangement is operable to analyse the quality of intermediary computing models to determine a degree of training of the intermediary computing model provided thereto by the worker node. Specifically, a portion of the worker nodes in the plurality of worker nodes potentially provide a sophisticated degree of training to the computing model that contributes significantly to a complete training of the computing model, whereas another portion of the worker nodes are potentially not capable of providing a satisfactory training to the computing model with a result that their intermediary computing models thereof have higher error rates. Therefore, the monitoring arrangement analyses each of the intermediary computing model and contribution thereof towards the trained computing model and thereafter, rewards the worker nodes accordingly, namely efficient worker nodes that provide intermediary computing models exhibiting lower error rates are rewarded more generously than worker nodes that provide intermediary computing models exhibiting higher error rates.

Optionally, the at least one set of training data used to train the computing model are owned by one or more worker nodes of the plurality of worker nodes and/or are provided by the monitoring arrangement to one or more worker nodes. Optionally, the at least one set of training data is private to a given worker node, or is public and commonly shared between the worker nodes, or a combination thereof. In an example implementation, if the at least one set of training data is privately owned by a given worker node and is used to obtain an efficiently trained computing model, such a given worker node is provided a higher reward in comparison to other worker nodes in the distributed computer system.

Optionally, the reward provided to the at least one of the worker nodes for training the computing model is based on the characteristics of the at least one set of training data. Specifically, the characteristics primarily refer to ownership of the at least one set of training data. In an example implementation, a worker node using a given set of training data owned thereby to train the computing model is provided a higher reward in comparison to a worker node receiving a set of training data from the monitoring arrangement.

Optionally, the trained computing model provided by at least one of the plurality of worker nodes is public to the plurality of worker nodes. Alternatively, optionally, the trained computing model is shared privately with the monitoring arrangement by at least one of the plurality of worker nodes.

In an embodiment, the monitoring arrangement analyses a plurality of trained computing models received from a plurality of worker nodes and identifies a trained computing model with a reduced error rate (for example, a minimum error rate) and/or a highest quality; "quality" is elucidated in the foregoing. Consequently, one or more worker nodes associated with such a trained computing model are provided a reward in proportion to a contribution thereof towards improving the computing model. In an example embodiment, the worker nodes providing the trained computing model with a reduced (for example, a minimum) error rate and/or a highest quality are provided a major fraction (for example, half) of the reward provided by the monitoring arrangement, wherein each of the worker nodes training the computing model optionally uses a private set of training data. The remaining fraction of the total reward is beneficially distributed proportionally according to the intermediary computing models received from other worker nodes that contributed towards the trained model with a reduced (for example, a minimum) error rate and/or a highest quality. For example, if a given worker node 'A' obtained a most efficiently trained computing model and during training, reported receiving 75 intermediary computing models from a worker node 'B', and 25 intermediary computing models from a worker node 'C', the monitoring arrangement beneficially distributes 50% of the reward to the worker node 'A', 37.5% of the reward to the worker node 'B', and 12.5% of the reward to the worker node 'C'. Beneficially, such a reward-based system is advantageous in that it incentivizes worker nodes that are providing efficient training to the computing model, even if they are not generating the most efficient computing model; this encourages the plurality of worker nodes to perform in a highly productive manner. As a result, in the present system, a higher reward for nodes, for example, results in less system errors in future system activity, while relatively a lowest reward for nodes results in nodes being 'switched-off', for example to decrease an error rate in the system or to prevent future system errors from such nodes.

Optionally, the at least one smart contract includes a compensation for worker nodes having a limited computing power relative to other of the worker nodes, wherein the worker nodes of limited computing capability are limited in the frequency and number of intermediary computing models that they provide due to limitations in their computing capability, for example data processor clocking rate, how many data processor are configured to operate mutually together (e.g. as in quad-core processors). It will be appreciated that different worker nodes in the distributed computer control system possess differing computing capabilities. Therefore, the worker nodes having a limited computing capability are optionally provided a lower number of intermediary computing models at a lower frequency rate in comparison to worker nodes having a higher computing capability. However, it will be appreciated that the intermediary computing models provided by the worker nodes having a limited computing capability potentially provide training of a higher quality thereto and potentially contribute significantly towards the trained computing model despite being limited in the frequency and number of intermediary computing models provided thereby. Therefore, the monitoring arrangement by using the at least one smart contract accordingly compensates such worker nodes with limited computing capability for training the computing model.

Optionally, the monitoring arrangement operates to exclude from the distributed computer control system, worker nodes whose number, frequency and/or quality of intermediary computing models provided thereby to the remainder of the worker nodes are below a predefined threshold and/or to exclude worker nodes whose intermediary computing models are found to be erroneous to operation of the distributed computer system. In other words, the distributed computer control system includes a configuration of worker nodes that is able to dynamically reconfigure itself when in operation to ensure an improved technical performance of the distributed computer control system, for example by excluding or expelling worker nodes from the system that are under-performing or faulty. As aforementioned, the monitoring arrangement monitors the number, frequency and quality of each intermediary computing model provided by the plurality of worker nodes. Therefore, as aforementioned, the monitoring arrangement excludes the worker nodes whose number and/or frequency of intermediary computing model is below a predefined threshold. Alternatively, one or more worker nodes of the distributed computer control system is able to report unreceived intermediary computing models that were expected thereby from a given worker node. Such worker node is analysed for exclusion from the distributed computer control system by the monitoring arrangement. Such a functionality of the distributed computer control system to deselect underperforming worker nodes reconfigures the distributed computer control system to function in a more efficient manner.

In an example embodiment, the predefined threshold is optionally defined by the monitoring arrangement as a minimum number and rate at which each of the worker nodes is to provide an intermediary computing model; a worker node is deselected or excluded (namely, "switched out") if it performs below the predefined threshold. Additionally, the predefined threshold is optionally defined based on computing capabilities of the worker nodes, wherein the values of predefined thresholds potentially differ for worker nodes with mutually differing computing capabilities. Moreover, the monitoring arrangement beneficially excludes worker nodes whose intermediary computing models are found to be erroneous to the operation of the distributed computer system and specifically, to the training of the computing models; in other words, worker nodes that generate intermediary computing models that are erroneous and do not satisfy a quality threshold are deselected or excluded (namely, "switched out", causing the distributed computer control system to reconfigure itself) if the performs below predefined quality threshold. Specifically, a potential situation can arise where one or more worker nodes intentionally provide faulty intermediary computing models, wherein such faulty intermediary computing models do not contribute towards training of the computing model or possibly, negatively affect the training process. It will be appreciated that such faulty intermediary computing models are beneficially reported by one or more worker nodes of the distributed computer system. Therefore, if such faulty intermediary computing models are regularly received from a given worker node, such a worker node is advantageously excluded, as aforementioned, from the distributed computer control system. Furthermore, upon exclusion of a given worker node from the distributed computer system, the given worker node does not receive any later intermediary computing models. Additionally, intermediary computing models communicated by the given worker node that has been excluded are not received by the remainder of the worker nodes. Such an incentivization assists to keep the worker nodes functioning correctly and in a most efficient manner, thereby improving an overall operating performance of the distributed computing system. Optionally, the distributed computer control system includes a mechanism for reintroducing worker nodes that have been earlier excluded, for example by way of a proof test that the excluded worker nodes are able to perform to an acceptable standard for the system.

The present disclosure also relates to the method as described above. Various embodiments and variants disclosed above apply *mutatis mutandis* to the method.

Optionally, the method comprises excluding worker nodes from the distributed computer control system whose number, frequency and/or quality of intermediary computing models provided thereby to the remainder of the worker nodes are below a predefined threshold and/or to exclude worker nodes whose intermediary computing models are found to be erroneous to operation of the distributed computer control system. By selectively excluding (namely "switching out") underperforming nodes enables the distributed computing control system to reconfigure itself in a dynamic manner to improve its operating performance and accuracy, potentially improving its operating stability and responsiveness.

Optionally, the method comprises arranging for the plurality of worker nodes to employ machine learning algorithms to train the computing model.

Optionally, the method comprises arranging for the learning parameters provided by the monitoring arrangement to comprise information relating to at least one of:
(i) a subset of worker nodes from the plurality of worker nodes receiving the intermediary computing models;
(ii) a synchronization mode that is followed by the plurality of worker nodes; and
(iii) a latest intermediary computing model to be trained within the distributed computer system.

Optionally, the method comprises, when in operation, switching between the plurality of synchronization modes depending on a data processing load being experienced at any given time by the distributed computer control system.

Optionally, in the method, the at least one smart contract includes a compensation for worker nodes having a limited computing power relative to other of the worker nodes, wherein the worker nodes of limited computing capability are limited in a frequency and number of intermediary computing models that they provide due to limitations in computing capability thereof (for example, lower data processor clocking speed, data memory of relatively slower access speed and so forth).

In yet another aspect, the present disclosure provides a computer program product comprising a non-transitory computer-readable storage medium having computer-readable instructions stored thereon, the computer-readable instructions being executable by a computerized device comprising processing hardware to execute the aforesaid method for operating a distributed computer control system.

### DETAILED DESCRIPTION OF THE DRAWINGS

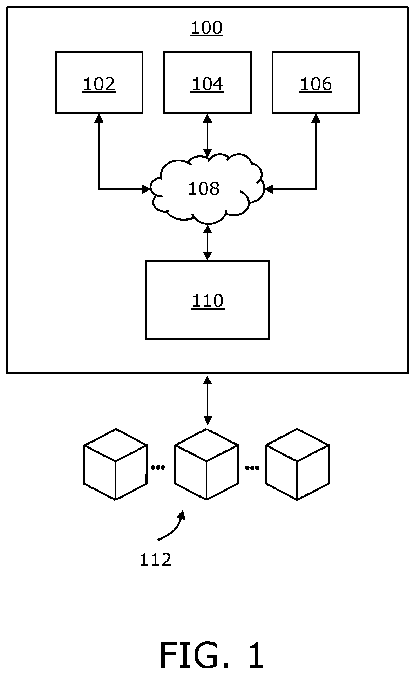

Referring to FIG. 1, there is provided a schematic illustration of a data network environment, wherein a distributed computer control system **100** is implemented, pursuant to an embodiment of the present disclosure. The distributed computer control system **100** includes a plurality of worker nodes, such as the worker nodes **102, 104, 106,** that are coupled together via a data communication network **108** to exchange data therebetween. Collective learning of the worker nodes, such as the worker nodes **102, 104, 106,** occurs during operation of the distributed computer control system **100.** The worker nodes **102, 104, 106** include computing arrangements that process data therein. Moreover, operation of the distributed computer control system **100** is coordinated by employing a distributed ledger arrangement **112.** The distributed computer control system **100** is arranged to execute at least one smart contract via use of the distributed ledger arrangement **112.** The distributed computer control system **100** comprises a monitoring arrangement **110** to provide learning parameters to each of the plurality of worker nodes **102, 104, 106** by executing the at least one smart contract. Specifically, each of the worker nodes **102, 104, 106,** when in operation, trains a computing model based on the learning parameters and at least one set of training data. The monitoring arrangement **110** provides a reward to at least one of the worker nodes **102, 104, 106** for training the computing model, wherein the reward is determined based on:
(i) a number and frequency of intermediary computing models provided by a given worker node to a remainder of the worker nodes; and
(ii) a quality of the intermediary computing models.

Determination of "quality" of the intermediary computing models is described in greater detail in the foregoing; such a "quality" can be determined, for example, from a convergence gradient, an aggregated convergence gradient, or by performing correlation of a plurality of measurand parameters that provide an indication of quality.

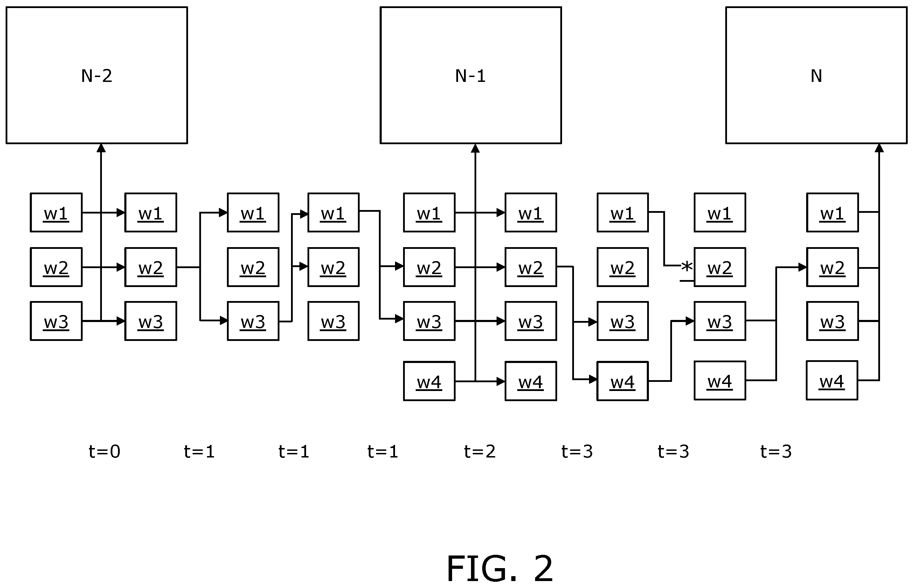

Referring to FIG. 2, there is provided a block diagram depicting an exemplary execution of smart contracts by a monitoring arrangement (such as the monitoring arrangement **110** of FIG. 1) for coordinating operation of worker nodes, in accordance with an embodiment of the present disclosure. At a time, t=0, the distributed computer control system comprises the worker nodes w1, w2 and w3. Furthermore, at the time t=0, a smart contract is added to a block N-2 of a distributed ledger arrangement (such as the distributed ledger arrangement **112).** The smart contract added to the block N-2 provides learning parameters for an iteration N-2 of the training process for a computing model. Such a smart contract provides a subset of worker nodes receiving the intermediary computing models from the remainder of worker nodes. Herein, at t=1, each of the worker nodes w1, w2 and w3 receives intermediary computing models from the remainder of worker nodes in the distributed computer system. Specifically, the worker node w2 communicates intermediary computing models to the worker nodes w1 and w3, the worker node w3 communicates intermediary computing models to the worker nodes w1 and w2, and the worker node w1 communicates intermediary computing models to a remainder of the worker nodes w2 and w3.

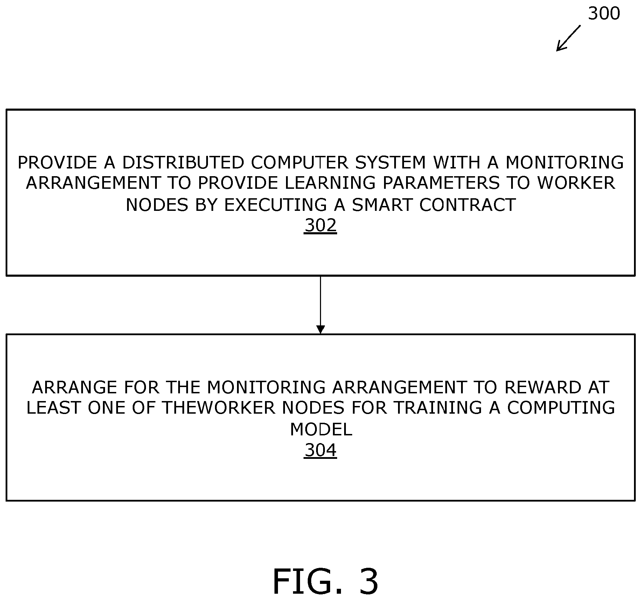

At a time, t=2, a smart contract is added to a block N-1 of a distributed ledger arrangement. At the time t=2, the monitoring arrangement, on account of the smart contract added to the block N-1, excludes the worker node w1 from the distributed computer control system. Moreover, another worker node w4 is added to the distributed computer control system. Furthermore, such a smart contract establishes the worker nodes that are to be communicating the intermediary computing models thereof and the worker nodes that are to be receiving the intermediary computing models. Herein, at a time t=3, the worker node w2 communicates the intermediary computing models to worker nodes w3 and w4, the worker node w4 communicates the intermediary computing model to the worker node w3, and the worker nodes w3 and w4 communicate intermediary computing models thereof to the worker node w2. Moreover, as shown in the FIG. 3, the intermediary computing model communicated by the worker node w1 to the worker node w2 is not received thereby due to the worker node w1 being excluded from the distributed computer control system by the smart contract added to the block N-1. Furthermore, each of the worker nodes provide computing models at the end of each step (specifically at t=0, t=2 and t=3) to the monitoring arrangement by way of the blocks.

It will be appreciated that any or all of smart contracts added to the blocks N-2, N-2 and N of the distributed ledger arrangement provide a latest intermediary computing model to be trained in a next iteration of the training process and also, optionally switches the synchronisation mode that is to be utilized by the plurality of worker nodes.

It will be appreciated by a person skilled in the art that FIG. 2 is an illustration of a simplified execution of smart contracts by the monitoring arrangement, for sake of clarity, which should not unduly limit the scope of the claims herein. The person skilled in the art will recognize many variations, alternatives, and modifications of embodiments of the present disclosure.

Referring next to FIG. 3, there is provided an illustration of a flow chart depicting steps of a method **300** for operating a distributed computer system, in accordance with an embodiment of the present disclosure. The distributed computer system (such as the distributed computer control system **100** of FIG. 1) includes a plurality of worker nodes (such as the worker nodes **102, 104, 106)** that are coupled together via a data communication network to exchange data therebetween. The plurality of worker nodes includes computing arrangements to process data therein, wherein collective learning of the worker nodes is organized within the distributed computer system. The distributed computer control system employs a distributed ledger arrangement (such as the distributed ledger arrangement **112** of FIG. 1) to coordinate operation of the distributed computer control system, wherein the distributed computer control system is arranged to execute at least one smart contract via use of the distributed ledger arrangement. At a step **302,** the distributed computer control system is provided with a monitoring arrangement to provide learning parameters to each of the plurality of worker nodes by executing the at least one smart contract, Notably, each of the plurality of worker nodes, when in operation, trains a computing model based on the learning parameters and at least one set of training data. At a step **304,** the monitoring arrangement is arranged to reward at least one of the plurality of worker nodes for training the computing model. The reward is determined based on a number and frequency of intermediary computing models provided by a given worker node to a remainder of the worker nodes and also a quality of the intermediary computing models. Such a "quality" is elucidated in greater detail in the foregoing.

The steps **302** and **304** are only illustrative and other alternatives can also be provided where one or more steps are added, one or more steps are removed, or one or more steps are provided in a different sequence without departing from the scope of the claims herein.

It will be appreciated that the distributed computing system **100** can be used to control a complex facility, for example a petrochemicals processing plant. For example, the system **100** can be used to control one more sets of equipment within a defined framework, wherein the framework can be defined as a set of equipment within a manufacturing line that leads to a final product. In such a case the result obtained after implementing any of the collective learning methods disclosed in the present document, at least in terms of optimisation and efficiency would be comparable (though not similar or equal) to a collective learning system implemented in a computer system with a central control (which is typical of machine learning implemented for process control). In contrast, within the context of a manufacturing and distributing of a product, including any or all of its optional steps, when implemented via a system with decentralised worker nodes, forming a distributed system, a higher efficiency in terms of time, energy or any physical variable, is, among other options, achieved by switching off nodes that are slowing down processing, or nodes attempting to introduce malicious content after the collective learning implemented via training computer models allows the system to learn to be more efficient or more reliable by switching off the participation of such nodes. In practice, such nodes experience a block (such as an encryption) that prevents them participating in the system, or are switched off from the system, thus preventing further participation.

In such an implementation, or any implementation where the distributed computer system is used to control a facility or a set of worker nodes within a facility or within the context of manufacturing or distributing a product or a similar context including static or moving physical devices or equipment, for example, the distributed computing system **100** receives measured sensor signal representative of physical conditions pertaining in the petrochemicals processing plant. Moreover, the distributed computing system **100** provides outputs that control various valves and actuators that control flows of various fluids within the petrochemicals processing plant. In order to provide such control, the distributed computing system **100** maintains internally a computing model that is a representation of the petrochemicals processing plant. The distributed computing system **100** employs the computing model to predict various operating scenarios that will arise if certain of the valves and actuators are adjusted. It will also be appreciated that the petrochemicals processing plant is potentially periodically changing in configuration as faulty equipment is disconnected and new equipment is brought into use. In such a scenario, it is essential that the distributed computing system functions in a stable manner, otherwise an operating safety of the petrochemicals processing plant is put in jeopardy with potentially catastrophic consequences. Moreover, it is also essential that the computing model is accurate and up-to-date, otherwise the distributed computing system **100** will potentially make incorrect decisions that can also have catastrophic consequences for safety of the petrochemicals processing plant. By employing embodiments of the present disclosure, the distributed computing system **100** can be made more robust and stable when in operation, and potentially more responsive. Such advantages arise because the distributed computing system **100** is able to reconfigure its worker nodes in a dynamic manner, in response to a manner and effectiveness in which the worker nodes learn to improve iteratively the computing model.

Optionally, depending on the context in which the method is implemented, the monitoring arrangement requests a deposit from each of the plurality of worker nodes that are arranged to participate in the training of the computing model, wherein a collection of the deposits from the plurality of worker nodes is distributed proportionately among at least one of the plurality of worker nodes providing the trained computing model, depending on performance of the worker nodes.

Although an example of the distributed computing system **100** employed to control a petrochemical processing plant is provided, it will be appreciated that the distributed computing system **100** is capable of being used in many alternative real-world control and monitoring roles, for example in electrical power plants, in nuclear power plants, in financial services technology, in aviation control systems, in distributed military systems and so forth.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

### APPENDIX

An example script of executable code for implementing a smart contract coordinator is given below, to provide an enabling disclosure:

| Example function implementation | Description |
|---|---|
| // Add new client @action function addClient(new_client :ClientAddress) if faulty_clients_list.contains(new_client) return; // Client rejected endif active_clients_list.add(new_client); | Adds a new worker node to the plurality of worker nodes. Excludes previously banned participants. |
| endfunction | |
| // Update coordination state @action function setCoordinationState(current_client : ClientAddress) if current_client is not SMART_CONTRACT_OWNER return // Only contract owner can run this function endif coordination_state.clear(); | Updates list of worker nodes from which to select where new updates should be pushed and synchronisat ion mode. |
| for (client : active_clients_list) if isFaulty(client) active_clients_list.remove(client); | |
| faulty_clients_list.add(client); | |
| continue; | |
| endif var peers=randomSelect(active_clients_list.exclude(client) ,number_of_peers); | |
| coord_ination_state.add(client,peers); | |
| loop var statistics = active_clients_list.getStatistics(); | |
| if statistics.calculate_std_dev() > std_dev_treshold coordination_state.setSyncMode(SYNCHRONOUS); | |
| else coordination_state.setSyncMode(ASYNCHRONOUS); | |
| endif endfunction | |
| // example of method for detecting faulty clients function isFaulty(client : ClientAddress) : 45oolean var sent_updates=client.getSentUpdatesCount(); | Technical check for faulty worker nodes . Worker nodes deemed faulty no longer receive updates from other worker nodes, and their updates will be ignored in future. |
| var received_updates = active_clients_list.exclude(client).getReceivedUpdatesC ount(client); | |
| if sent_updates*UPDATE_TRESHOLD > received_updates return true; | |
| endif return false; | |
| endfunction | |
| // method to get clients statistics function getStatistics(clients : list<ClientAddress>) : Statistics var statistics = Statistics(); | Returns performance statistics from a list of worker nodes. |
| for client : clients statistics.add(client.getId(), client.getLossValues()); | |
| loop return statistics; | |
| endfunction | |
| @query function getCoordinationState(current_client : ClientAddress) : CoordinationState return CoordinationState(coordination_state.getPeersList().at( current_client ),coordination_state.getSyncMode(),faulty_clients_list); | Query function called by worker nodes to retrieve list of peers, synchronisat ion mode and list of faulty clients. |
| Endfunction | |

## Claims

1. A distributed computer control system (100) that includes a plurality of worker nodes (102, 104, 106) that are coupled together via a data communication network (108) to exchange data therebetween, wherein collective learning of the worker nodes (102, 104, 106) occurs within the distributed computer control system (100), wherein the worker nodes (102, 104, 106) include computing arrangements to process data therein, wherein operation of the distributed computer control system (100) is coordinated by employing a distributed ledger arrangement (112), wherein the distributed computer control system (100) is arranged to execute at least one smart contract via use of the distributed ledger arrangement (112),
wherein
the distributed computer control system (100) comprises a monitoring arrangement (110) to provide a reward to at least one of the worker nodes (102, 104, 106) for training a computing model, wherein the reward is determined based on:
(i) a number and frequency of intermediary computing models provided by a given worker node to a remainder of the worker nodes; and
(ii) a quality of the intermediary computing models,
**characterized in that** the monitoring arrangement (110) provides learning parameters to each of the plurality of worker nodes (102, 104, 106) by executing the at least one smart contract, wherein each of the worker nodes (102, 104, 106) is operable to train the computing model based on the learning parameters and at least one set of training data, wherein the plurality of worker nodes are configured to collectively train the computing model in multiple iterations in a synchronous synchronization mode or an asynchronous synchronization mode, wherein in a synchronous synchronization mode, each of the worker nodes performs training of computing model and provides an intermediary computing model before proceeding to the next iteration of the training process, while in the asynchronous synchronization mode, each of the worker nodes perform training independent of the training progress of other worker nodes in the plurality of worker nodes, wherein each worker node comprises an intermediary computing model, that has been partially trained, wherein at the end of each iteration, the at least one smart contract is added to the distributed ledger arrangement (112) as a block to establish the learning parameters for a next iteration, wherein the monitoring arrangement (110) is configured to dynamically switch between the synchronization modes to ensure that a coordinated collective training of the computing model is achieved.

2. A distributed computer control system (100) of claim 1, **characterized in that** the monitoring arrangement (110) operates to exclude from the distributed computer control system (100), worker nodes whose number, frequency and/or quality of intermediary computing models provided thereby to the remainder of the worker nodes (102, 104, 106) are below a predefined threshold and/or to exclude worker nodes whose intermediary computing models are found to be erroneous to operation of the distributed computer control system (100).

3. A distributed computer control system (100) of any one of the claims 1 or 2, **characterized in that** the plurality of worker nodes (102, 104, 106) employs machine learning algorithms to train the computing model.

4. A distributed computer control system (100) of any one of the preceding claims, **characterized in that** the learning parameters provided by the monitoring arrangement (110) comprise information relating to at least one of:
(i) a subset of worker nodes from the plurality of worker nodes (102, 104, 106) receiving the intermediary computing models;
(ii) a synchronization mode that is followed by the plurality of worker nodes (102, 104, 106); and
(iii) a latest intermediary computing model to be trained within the distributed computer control system (100).

5. A distributed computer control system (100) of any one of the preceding claims, **characterized in that** the at least one smart contract includes a compensation for worker nodes having a limited computing power relative to other of the worker nodes (102, 104, 106), wherein the worker nodes of limited computing capability are limited in the frequency and number of intermediary computing models that they provide due to limitations in computing capability thereof.

6. A method for operating a distributed computer control system (100) that includes a plurality of worker nodes (102, 104, 106) that are coupled together via a data communication network (108) to exchange data therebetween, wherein the plurality of worker nodes (102, 104, 106) includes computing arrangements to process data therein, wherein collective learning occurs within the distributed computing system (100), wherein the distributed computer control system (100) employs a distributed ledger arrangement (112) to coordinate operation of the distributed computer control system (100), wherein the distributed computer control system (100) is arranged to execute at least one smart contract via use of the distributed ledger arrangement (112), **characterized in that** the method includes:
(i) providing the distributed computer control system (100) with a monitoring arrangement (110) to provide learning parameters to each of the plurality of worker nodes (102, 104, 106) by way of executing the at least one smart contract, wherein each of the plurality of worker nodes (102, 104, 106) is operable to train a computing model based on the learning parameters and at least one set of training data;
(ii) arranging for the monitoring arrangement (110) to reward at least one of the plurality of worker nodes (102, 104, 106) for training the computing model, wherein the reward is determined based on a number and frequency of intermediary computing models provided by a given worker node to a remainder of the worker nodes and the quality of the intermediary computing models; and
(iii) arranging for the monitoring arrangement (110) to track the operation of each of the worker nodes (102, 104, 106) wherein the method further comprises the plurality of worker nodes collectively training the computing model in multiple iterations in a synchronous synchronization mode or an asynchronous synchronization mode,
wherein in a synchronous synchronization mode, each of the worker nodes performs training of computing model and provides an intermediary computing model before proceeding to the next iteration of the training process, while in the asynchronous synchronization mode, each of the worker nodes perform training independent of the training progress of other worker nodes in the plurality of worker nodes, wherein each worker node comprises an intermediary computing model, that has been partially trained, wherein at the end of each iteration, the at least one smart contract is added to the distributed ledger arrangement (112) as a block to establish the learning parameters for a next iteration, wherein the monitoring arrangement (110) dynamically switches between the synchronization modes to ensure that a coordinated collective training of the computing model is achieved.

7. A method of claim 6, **characterized in that** the method comprises excluding from the distributed computer control system (100), worker nodes whose number, frequency and/or quality of intermediary computing models provided thereby to the remainder of the worker nodes (102, 104, 106) are below a predefined threshold and/or to exclude worker nodes whose intermediary computing models are found to be erroneous to operation of the distributed computer control system (100).

8. A method of any one of the claims 6 or 7, **characterized in that** method comprises arranging for the plurality of worker nodes (102, 104, 106) to employ machine learning algorithms to train the computing model.

9. A method of any one of the claims 6 to 8, **characterized in that** the method comprises arranging for the learning parameters provided by the monitoring arrangement (110) to comprise information relating to at least one of:
(i) a subset of worker nodes from the plurality of worker nodes (102, 104, 106) receiving the intermediary computing models;
(ii) a synchronization mode that is followed by the plurality of worker nodes (102, 104, 106); and
(iii) a latest intermediary computing model to be trained within the distributed computer control system (100).

10. A method of any one of the claims 7 to 9, **characterized in that** the at least one smart contract includes a compensation for worker nodes having a limited computing power relative to other of the worker nodes (102, 104, 106), wherein the worker nodes of limited computing capability are limited in the frequency and number of intermediary computing models that they provide due to limitations in computing capability thereof.

11. A computer program product comprising a non-transitory computer-readable storage medium having computer-readable instructions stored thereon, the computer-readable instructions being executable by a computerized device comprising processing hardware to execute a method as claimed in any of the claims 6 to 10.

## Patentansprüche

1. Verteiltes Computersteuersystem (100), das eine Mehrzahl von Arbeiterknoten (102, 104, 106) aufweist, die über ein Datenkommunikationsnetzwerk (108) miteinander gekoppelt sind, um Daten zwischen ihnen auszutauschen, wobei kollektives Lernen der Arbeiterknoten (102, 104, 106) innerhalb des verteilten Computersteuersystems (100) stattfindet, wobei die Arbeiterknoten (102, 104, 106) Berechnungsanordnungen aufweisen, um Daten darin zu verarbeiten, wobei der Betrieb des verteilten Computersteuerungssystems (100) durch Verwendung einer verteilten Hauptbuchanordnung (112) koordiniert wird, wobei das verteilte Computersteuersystem (100) angeordnet ist, um mindestens einen intelligenten Vertrag über die Verwendung der verteilten Hauptbuchanordnung (112) auszuführen, wobei
das verteilte Computersteuersystem (100) eine Überwachungsanordnung (110) umfasst, um mindestens einem der Arbeiterknoten (102, 104, 106) eine Belohnung für das Trainieren eines Rechenmodells bereitzustellen, wobei die Belohnung bestimmt wird, basierend auf:
(i) einer Anzahl und Häufigkeit von intermediären Rechenmodellen, die von einem bestimmten Arbeiterknoten an den Rest der Arbeiterknoten bereitgestellt werden; und
(ii) einer Qualität der intermediären Rechenmodelle, **dadurch gekennzeichnet, dass** die Überwachungsanordnung (110) Lernparameter an jeden der Mehrzahl von Arbeiterknoten (102, 104, 106) durch Ausführen des mindestens einen intelligenten Vertrags bereitstellt, wobei jeder der Arbeiterknoten (102, 104, 106) betreibbar ist, das Rechenmodell basierend auf den Lernparametern und mindestens einem Satz von Trainingsdaten zu trainieren, wobei die Mehrzahl von Arbeiterknoten ausgelegt ist, das Rechenmodell in mehreren Iterationen in einem synchronen Synchronisationsmodus oder einem asynchronen Synchronisationsmodus gemeinsam zu trainieren, wobei in einem synchronen Synchronisationsmodus jeder der Arbeiterknoten das Training des Rechenmodells durchführt und ein intermediäres Rechenmodell bereitstellt, bevor er mit der nächsten Iteration des Trainingsprozesses fortfährt, während in dem asynchronen Synchronisationsmodus jeder der Arbeiterknoten ein Training unabhängig von dem Trainingsfortschritt anderer Arbeiterknoten in der Mehrzahl von Arbeiterknoten durchführt, wobei jeder Arbeiterknoten ein intermediäres Rechenmodell umfasst, das teilweise trainiert wurde, wobei am Ende jeder Iteration der mindestens eine intelligente Vertrag zu der verteilten Hauptbuchanordnung (112) als ein Block hinzugefügt wird, um die Lernparameter für eine nächste Iteration einzurichten, wobei die Überwachungsanordnung (110) ausgelegt ist, um dynamisch zwischen den Synchronisationsmodi zu wechseln, um sicherzustellen, dass ein koordiniertes kollektives Training des Rechenmodells erreicht wird.

2. Verteiltes Computersteuersystem (100) nach Anspruch 1, **dadurch gekennzeichnet, dass** die Überwachungsanordnung (110) arbeitet, um Arbeiterknoten aus dem verteilten Computersteuersystem (100) auszuschließen, deren Anzahl, Häufigkeit und/oder Qualität von intermediären Rechenmodellen, die dadurch dem Rest der Arbeiterknoten (102, 104, 106) zur Verfügung gestellt werden, unter einem vordefinierten Schwellenwert liegen, und/oder um Arbeiterknoten auszuschließen, deren intermediäre Rechenmodelle sich als fehlerhaft für den Betrieb des verteilten Computersteuersystems (100) herausstellen.

3. Verteiltes Computersteuersystem (100) nach einem der Ansprüche 1 oder 2, **dadurch gekennzeichnet, dass** die Mehrzahl von Arbeiterknoten (102, 104, 106) Maschinenlernalgorithmen für ein Trainieren des Rechenmodells verwendet.

4. Verteiltes Computersteuersystem (100) nach einem der vorhergehenden Ansprüche, **dadurch gekennzeichnet, dass** die Lernparameter, die durch die Überwachungsanordnung (110) bereitgestellt werden, Informationen umfassen, die sich auf mindestens eines beziehen von:
(i) einer Teilmenge von Arbeiterknoten aus der Mehrzahl von Arbeiterknoten (102, 104, 106), die die intermediären Rechenmodelle empfangen;
(ii) einem Synchronisationsmodus, der von der Mehrzahl der Arbeiterknoten (102, 104, 106) befolgt wird; und
(iii) einem neuesten intermediären Rechenmodell, das innerhalb des verteilten Computersteuersystems (100) zu trainieren ist.

5. Verteiltes Computersteuersystem (100) nach einem der vorhergehenden Ansprüche, **dadurch gekennzeichnet, dass** der mindestens eine intelligente Vertrag eine Kompensation für Arbeiterknoten mit einer begrenzten Rechenleistung im Vergleich zu anderen der Arbeiterknoten (102, 104, 106) umfasst, wobei die Arbeiterknoten mit begrenzter Rechenleistung in der Häufigkeit und Anzahl von intermediären Rechenmodellen, die sie aufgrund ihrer begrenzten Rechenleistung bereitstellen, begrenzt sind.

6. Verfahren für ein Betreiben eines verteilten Computersteuerungssystems (100), das eine Mehrzahl von Arbeiterknoten (102, 104, 106) aufweist, die über ein Datenkommunikationsnetzwerk (108) miteinander gekoppelt sind, um Daten zwischen ihnen auszutauschen, wobei die Mehrzahl von Arbeiterknoten (102, 104, 106) Rechenanordnungen aufweist, um Daten darin zu verarbeiten, wobei kollektives Lernen innerhalb des verteilten Computersystems (100) stattfindet, wobei das verteilte Computersteuersystem (100) eine verteilte Hauptbuchanordnung (112) verwendet, um den Betrieb des verteilten Computersteuersystems (100) zu koordinieren, wobei das verteilte Computersteuersystem (100) angeordnet ist, um mindestens einen intelligenten Vertrag über die Verwendung der verteilten Hauptbuchanordnung (112) auszuführen, **dadurch gekennzeichnet, dass** das Verfahren umfasst:
(i) Bereitstellen des verteilten Computersteuersystems (100) mit einer Überwachungsanordnung (110), um Lernparameter für jeden der Mehrzahl von Arbeiterknoten (102, 104, 106) durch Ausführen des mindestens einen intelligenten Vertrags bereitzustellen, wobei jeder der Mehrzahl von Arbeiterknoten (102, 104, 106) betreibbar ist, um ein Berechnungsmodell basierend auf den Lernparametern und mindestens einem Satz von Trainingsdaten zu trainieren;
(ii) Anordnen der Überwachungsanordnung (110), um mindestens einen der Mehrzahl von Arbeiterknoten (102, 104, 106) für das Trainieren des Rechenmodells zu belohnen, wobei die Belohnung basierend auf einer Anzahl und Häufigkeit von intermediären Rechenmodellen, die von einem gegebenen Arbeiterknoten für einen Rest der Arbeiterknoten bereitgestellt werden, und der Qualität der intermediären Rechenmodelle bestimmt wird; und
(iii) Anordnen der Überwachungsanordnung (110), um den Betrieb jedes der Arbeiterknoten (102, 104, 106) zu verfolgen, wobei das Verfahren ferner umfasst, dass die Mehrzahl der Arbeiterknoten das Rechenmodell in mehreren Iterationen in einem synchronen Synchronisationsmodus oder einem asynchronen Synchronisationsmodus kollektiv trainiert, wobei in einem synchronen Synchronisationsmodus jeder der Arbeiterknoten ein Training des Rechenmodells durchführt und ein intermediäres Rechenmodell bereitstellt, bevor mit der nächsten Iteration des Trainingsprozesses fortgefahren wird, während in dem asynchronen Synchronisationsmodus jeder der Arbeiterknoten ein Training unabhängig von dem Trainingsfortschritt anderer Arbeiterknoten in der Mehrzahl von Arbeiterknoten durchführt, wobei
jeder Arbeiterknoten ein intermediäres Rechenmodell umfasst, das teilweise trainiert wurde, wobei am Ende jeder Iteration der mindestens eine intelligente Vertrag zu der verteilten Hauptbuchanordnung (112) als ein Block hinzugefügt wird, um die Lernparameter für eine nächste Iteration einzurichten, wobei die Überwachungsanordnung (110) dynamisch zwischen den Synchronisationsmodi wechselt, um sicherzustellen, dass ein koordiniertes kollektives Training des Rechenmodells erreicht wird.

7. Verfahren nach Anspruch 6, **dadurch gekennzeichnet, dass** das Verfahren ein Ausschließen von Arbeiterknoten aus dem verteilten Computersteuersystem (100), deren Anzahl, Häufigkeit und/oder Qualität von intermediären Rechenmodellen, die dadurch dem Rest der Arbeiterknoten (102, 104, 106) zur Verfügung gestellt werden, unter einem vordefinierten Schwellenwert liegen, und/oder ein Ausschließen von Arbeiterknoten, deren intermediäre Rechenmodelle sich als fehlerhaft für den Betrieb des verteilten Computersteuersystems (100) herausstellen, umfasst.

8. Verfahren nach einem der Ansprüche 6 oder 7, **dadurch gekennzeichnet, dass** das Verfahren ein Anordnen der Mehrzahl von Arbeiterknoten (102, 104, 106) umfasst, um Maschinenlernalgorithmen für ein Trainieren des Rechenmodells einzusetzen.

9. Verfahren nach einem der Ansprüche 6 bis 8, **dadurch gekennzeichnet, dass** das Verfahren ein Anordnen der Lernparameter, die von der Überwachungsanordnung (110) bereitgestellt werden, umfasst, um Informationen zu umfassen, die sich auf mindestens eines beziehen von:
(i) einer Teilmenge von Arbeiterknoten aus der Mehrzahl von Arbeiterknoten (102, 104, 106), die die intermediären Rechenmodelle empfangen;
(ii) einem Synchronisationsmodus, der von der Mehrzahl der Arbeiterknoten (102, 104, 106) befolgt wird; und
(iii) einem neuesten intermediären Rechenmodell, das innerhalb des verteilten Computersteuersystems (100) zu trainieren ist.

10. Verfahren nach einem der Ansprüche 7 bis 9, **dadurch gekennzeichnet, dass** der mindestens eine intelligente Vertrag eine Kompensation für Arbeiterknoten mit einer begrenzten Rechenleistung im Vergleich zu anderen der Arbeiterknoten (102, 104, 106) umfasst, wobei die Arbeiterknoten mit begrenzter Rechenleistung in der Häufigkeit und Anzahl von intermediären Rechenmodellen, die sie aufgrund ihrer begrenzten Rechenleistung bereitstellen, begrenzt sind.

11. Computerprogrammprodukt, umfassend ein nicht flüchtiges, computerlesbares Speichermedium mit darauf gespeicherten computerlesbaren Anweisungen, wobei die computerlesbaren Anweisungen von einer computergestützten Vorrichtung mit Verarbeitungshardware ausgeführt werden können, um ein Verfahren nach einem der Ansprüche 6 bis 10 auszuführen.

## Revendications

1. Système distribué de commande informatique (100) comprenant une pluralité de nœuds de travail (102, 104, 106) qui sont couplés ensemble via un réseau de communication de données (108) pour échanger des données entre eux, dans lequel l'apprentissage collectif des nœuds de travail (102, 104, 106) se produit dans le système distribué de commande informatique (100), dans lequel les nœuds de travail (102, 104, 106) comprennent des agencements informatiques pour traiter des données dans ceux-ci, dans lequel le fonctionnement du système distribué de commande informatique (100) est coordonné en employant un agencement de grand livre distribué (112), dans lequel le système distribué de commande informatique (100) est agencé pour exécuter l'au moins un contrat intelligent via l'utilisation de l'agencement de grand livre distribué (112), dans lequel
le système distribué de commande informatique (100) comprend un agencement de surveillance (110) pour fournir une récompense à l'au moins un des nœuds de travail (102, 104, 106) pour l'apprentissage d'un modèle informatique, dans lequel la récompense est déterminée sur la base de :
(i) un nombre et une fréquence de modèles informatiques intermédiaires fournis par un nœud de travail donné au reste des nœuds de travail ; et
(ii) une qualité des modèles informatiques intermédiaires, **caractérisé en ce que** l'agencement de surveillance (110) fournit des paramètres d'apprentissage à chacun de la pluralité de nœuds de travail (102, 104, 106) en exécutant l'au moins un contrat intelligent, dans lequel chacun des nœuds de travail (102, 104, 106) est utilisable pour entraîner le modèle informatique sur la base des paramètres d'apprentissage et de l'au moins un ensemble de données d'entraînement, dans lequel la pluralité de nœuds de travail sont configurés pour entraîner collectivement le modèle informatique en de multiples itérations dans un mode de synchronisation synchrone ou un mode de synchronisation asynchrone, dans lequel, dans un mode de synchronisation synchrone, chacun des nœuds de travail réalise l'apprentissage du modèle informatique et fournit un modèle informatique intermédiaire avant de procéder à l'itération suivante du processus d'apprentissage, alors que dans le mode de synchronisation asynchrone, chacun des nœuds de travail effectue un apprentissage indépendamment des progrès d'apprentissage d'autres nœuds de travail dans la pluralité de nœuds de travail, dans lequel chaque nœud de travail comprend un modèle informatique intermédiaire, qui a été partiellement formé, dans lequel, à la fin de chaque itération, l'au moins un contrat intelligent est ajouté à l'agencement de grand livre distribué (112) en tant que bloc pour établir les paramètres d'apprentissage pour une itération suivante, dans lequel l'agencement de surveillance (110) est configuré pour commuter dynamiquement entre les modes de synchronisation afin d'assurer qu'un apprentissage collectif coordonné du modèle informatique est réalisé.

2. Système de commande informatique distribué (100) selon la revendication 1, **caractérisé en ce que** l'agencement de surveillance (110) fonctionne pour exclure du système distribué de commande informatique (100), des nœuds de travail dont le nombre, la fréquence et/ou la qualité des modèles informatiques intermédiaires fournis par ceux-ci au reste des nœuds de travail (102, 104, 106) sont inférieurs à un seuil prédéfini et/ou excluent les nœuds de travail dont les modèles informatiques intermédiaires sont jugés erronés pour le fonctionnement du système distribué de commande informatique (100).

3. Système distribué de commande informatique (100) selon l'une quelconque des revendications 1 ou 2, **caractérisé en ce que** la pluralité de nœuds de travail (102, 104, 106) emploie des algorithmes d'apprentissage automatique pour former le modèle informatique.

4. Système distribué de commande informatique (100) selon l'une quelconque des revendications précédentes, **caractérisé en ce que** les paramètres d'apprentissage fournis par l'agencement de surveillance (110) comprennent des informations concernant l'au moins un parmi :
(i) un sous-ensemble de nœuds de travail (102, 104, 106) recevant les modèles informatiques intermédiaires ;
(ii) un mode de synchronisation qui est suivi par la pluralité de nœuds de travail (102, 104, 106) ; et
(iii) un dernier modèle informatique intermédiaire à entraîner dans le système distribué de commande informatique (100).

5. Système distribué de commande informatique (100) selon l'une quelconque des revendications précédentes, **caractérisé en ce que** l'au moins un contrat intelligent comprend une compensation pour des nœuds de travail ayant une puissance de calcul limitée par rapport à d'autres nœuds de travail (102, 104, 106), dans lequel les nœuds de travail de capacité de calcul limitée sont limités dans la fréquence et le nombre de modèles informatiques intermédiaires qu'ils fournissent en raison de limitations de leur capacité de calcul.

6. Procédé d'exploitation d'un système distribué de commande informatique (100) comprenant une pluralité de nœuds de travail (102, 104, 106) qui sont couplés ensemble via un réseau de communication de données (108) pour échanger des données entre eux, dans lequel la pluralité de nœuds de travail (102, 104, 106) comprend des agencements informatiques pour traiter des données dans ceux-ci, dans lequel l'apprentissage collectif se produit dans le système distribué informatique (100), dans lequel le système distribué de commande informatique (100) emploie un agencement de grand livre distribué (112) pour coordonner le fonctionnement du système distribué de commande informatique (100), dans lequel le système distribué de commande informatique (100) est agencé pour exécuter au moins un contrat intelligent via l'utilisation de l'agencement de grand livre distribué (112), **caractérisé en ce que** le procédé comprend :
(i) la fourniture du système distribué de commande informatique (100) avec un agencement de surveillance (110) pour fournir des paramètres d'apprentissage à chacun de la pluralité de nœuds de travail (102, 104, 106) au moyen de l'exécution de l'au moins un contrat intelligent, dans lequel chacun de la pluralité de nœuds de travail (102, 104, 106) est utilisable pour entraîner un modèle informatique sur la base des paramètres d'apprentissage et d'au moins un ensemble de données d'apprentissage ;
(ii) l'agencement pour que le dispositif de surveillance (110) récompense au moins un de la pluralité de nœuds de travail (102, 104, 106) pour l'entraînement du modèle informatique, dans lequel la récompense est déterminée sur la base d'un nombre et d'une fréquence de modèles informatiques intermédiaires fournis par un nœud de travail donné au reste des nœuds de travail et la qualité des modèles informatiques intermédiaires ; et
(iii) l'agencement pour que le dispositif de surveillance (110) suive le fonctionnement de chacun des nœuds de travail (102, 104, 106) dans lequel le procédé comprend en outre la pluralité de nœuds de travail entraînant collectivement le modèle informatique en de multiples itérations dans un mode de synchronisation synchrone ou un mode de synchronisation asynchrone, dans lequel dans un mode de synchronisation synchrone, chacun des nœuds de travail réalise l'entraînement du modèle informatique et fournit un modèle informatique intermédiaire avant de procéder à l'itération suivante du processus d'entraînement, alors que dans le mode de synchronisation asynchrone, chacun des nœuds de travail effectue une formation indépendamment des progrès de formation d'autres nœuds de travail dans la pluralité de nœuds de travail, dans lequel
chaque nœud de travail comprend un modèle informatique intermédiaire, qui a été partiellement entraîné, dans lequel à la fin de chaque itération, l'au moins un contrat intelligent est ajouté à l'agencement de grand livre distribué (112) en tant que bloc pour établir les paramètres d'apprentissage pour une itération suivante, dans lequel l'agencement de surveillance (110) commute dynamiquement entre les modes de synchronisation pour assurer qu'un entraînement collectif coordonné du modèle informatique est réalisé.

7. Procédé selon la revendication 6, **caractérisé en ce que** le procédé comprend l'exclusion du système distribué de commande informatique (100), des nœuds de travail dont le nombre, la fréquence et/ou la qualité de modèles informatiques intermédiaires fournis par ceux-ci au reste des nœuds de travail (102, 104, 106) sont en dessous d'un seuil prédéfini et/ou pour exclure des nœuds de travail dont les modèles informatiques intermédiaires sont déterminés comme étant erronés pour le fonctionnement du système distribué de commande informatique (100).

8. Procédé selon l'une quelconque des revendications 6 ou 7, **caractérisé en ce que** le procédé comprend l'agencement pour que la pluralité de nœuds de travail (102, 104, 106) emploie des algorithmes d'apprentissage automatique pour former le modèle informatique.

9. Procédé selon l'une quelconque des revendications 6 à 8, **caractérisé en ce que** le procédé comprend l'agencement pour que les paramètres d'apprentissage fournis par le dispositif de surveillance (110) comprennent des informations concernant l'au moins un parmi :
(i) un sous-ensemble de nœuds de travail (102, 104, 106) recevant les modèles informatiques intermédiaires ;
(ii) un mode de synchronisation qui est suivi par la pluralité de nœuds de travail (102, 104, 106) ; et
(iii) un dernier modèle informatique intermédiaire à entraîner dans le système distribué de commande informatique (100).

10. Procédé selon l'une quelconque des revendications 7 à 9, **caractérisé en ce que** l'au moins un contrat intelligent comprend une compensation pour des nœuds de travail ayant une puissance de calcul limitée par rapport à d'autres nœuds de travail (102, 104, 106), dans lequel les nœuds de travail de capacité de calcul limitée sont limités dans la fréquence et le nombre de modèles informatiques intermédiaires qu'ils fournissent en raison de leurs limitations de capacité de calcul.

11. Produit-programme informatique comprenant un support de stockage non transitoire lisible par ordinateur sur lequel sont stockées des instructions lisibles par ordinateur, les instructions lisibles par ordinateur étant exécutables par un dispositif informatisé comprenant un matériel de traitement permettant d'exécuter un procédé selon l'une quelconque des revendications 6 à 10.
